# EUROPÄISCHE PATENTSCHRIFT

(11) **EP 4 285 037 B1**
(45) Veröffentlichungstag und Bekanntmachung des Hinweises auf die Patenterteilung: **26.06.2024**
(21) Anmeldenummer: 22702850.3
(22) Anmeldetag: 28.01.2022
(51) Int. Cl.: F16D 65/00, B60T 17/22

(54) **MESSFELGE ZUM SAMMELN VON BREMSABRIEB**
MEASURING RIM FOR COLLECTING ABRADED BRAKE PARTICLES
JANTE DE MESURE POUR RECUEILLIR DES PARTICULES DE FREIN ABRASÉES

(30) Priorität: 29.01.2021 AT 500532021
(43) Veröffentlichungstag der Anmeldung: 06.12.2023
(73) Patentinhaber: AVL List GmbH, 8020 Graz (AT)
(72) Erfinder: HUBER, Michael Peter, 8010 Graz (AT); FISCHER, Peter, 4451 Garsten (AT); KUPPER, Martin, 8045 Graz (AT); KLUG, Andreas, 8102 Semriach (AT)
(74) Vertreter: Patentanwälte Pinter & Weiss OG
(86) Internationale Anmeldenummer: PCT/AT2022/060026
(87) Internationale Veröffentlichungsnummer: WO 2022/160000

(56) Entgegenhaltungen:
- WO-A1-2021/008887
- DE-A1-102016 124 121
- DE-A1-102017 006 349
- DE-A1-102017 200 941
- DE-U1-202008 009 177
- US-A1- 2014 054 120

## Beschreibung

Die gegenständliche Erfindung betrifft eine Messfelge mit einer Felgenumfangsfläche, die zumindest an einer Felgenstirnfläche der Messfelge über eine oder mehrere Speichen mit einem zentral innen liegenden Felgenflansch verbunden ist, wobei zwischen der Felgenumfangsfläche, den Speichen und dem Felgenflansch ein Felgeninnenraum ausgebildet ist. Die Erfindung betrifft außerdem eine Anordnung zum Erfassen des Bremsabriebs einer Bremseinrichtung eines Fahrzeugrades, wobei das Fahrzeugrad eine eingangs beschriebene Messfelge aufweist.

Die Umweltbelastung mit Feinstaub durch Fahrzeuge ist seit langem bekannt und unterliegt immer strengeren gesetzlichen Regulatorien. Dabei war der Fokus bislang hauptsächlich die durch den Verbrennungsvorgang in einem Verbrennungsmotor erzeugte Feinstaubbelastung, die über die Verbrennungsabgase in die Umwelt gelangen. Mittlerweise wurden aber auch andere Feinstaubquellen in einem Fahrzeug identifiziert. Hierbei ist insbesondere die Bremsanlage eines Fahrzeugs in den Fokus gelangt. Der Abrieb der Bremsscheibe und der Bremsbeläge während des Betriebs des Fahrzeugs erzeugt Feinstaub, der in die Umwelt gelangt und für die Feinstaubbelastung der Luft mitverantwortlich ist.

Es sind daher schon Bremsabrieb-Partikelfilter bekannt geworden, die die Bremsscheibe teilweise umgeben und in Drehrichtung nach der Bremse angeordnet sind, um während des Betriebs eines Fahrzeugs den Bremsabrieb beim Bremsen zu sammeln und zu filtern. Ein Beispiel hierfür ist in WO 2019/0048377 A1 beschrieben. Solche Bremsabrieb-Partikelfilter sind auch mit aktiver Absaugung bekannt, beispielsweise aus WO 2011/1160976 A1.

Die Hersteller von Fahrzeugen oder von Bremsanlagen legen auch vermehrt ihr Augenmerk auf die Verringerung der Erzeugung von Feinstaub durch die Bremsanlage. Um eine Bremsanlage zu entwickeln werden oftmals Bremsenprüfstände verwendet, auf denen die Bremsanlage aufgebaut und dynamischen Tests unterworfen wird. Um die Entstehung und das Ausmaß der Feinstauberzeugung durch Abrieb der Bremsscheibe / Bremsbeläge besser beurteilen zu können, ist es schon bekannt, solche Bremsenprüfstände zu erweitern, um den Bremsenabrieb messen zu können. Ein Beispiel hierfür ist die WO 2017/097901 A1. Auch in der Fachliteratur wurde diese Problemstellung bereits behandelt, beispielsweise in Kukutschovä J., et al., "On airborne nano/micro-sized wear particles released from lowmetallic automotive brakes", Environmental Pollution 159 (2011), S.998-1006. Dabei werden die Bremsscheibe und der Bremsbelag am Bremsenprüfstand im Wesentlichen eingehaust und die Luft in der Einhausung abgesaugt und analysiert. Da die beim Bremsvorgang entstehenden Partikel ab einer gewissen Grenztemperatur stark temperaturabhängig sind, beeinflusst die Prozessführung, insbesondere der Luftvolumenstrom in der Einhausung, der nebenbei das gesamte System kühlt, die Partikelemissionen. Das kann die realitätsnahe Messung des Bremsenabriebs erschweren.

Ein Bremsenprüfstand kann aber den realen Einsatz in einem Fahrzeug auf der Straße immer nur annähern. Für realitätsnähere Beurteilungen ist daher auch immer interessant, Messungen am realen Fahrzeug während des Betriebs auf der Straße durchzuführen. Beispielsweise zeigt die DE 10 2017 006 349 A1 eine Vorrichtung zur Messung und Klassifizierung der Partikelemissionen einer Radbremse eines Fahrzeugs während des realen Betriebs auf der Straße, wobei diese Vorrichtung gleichfalls auf einem Bremsenprüfstand verwendet werden könnte. Hierbei wird die Bremse mit der Bremsscheibe und den Bremsbacken am Fahrzeug mit einer Einhausung umgeben. In die Einhausung wird Luft zugeführt und die partikelgeladene Luft aus der Einhausung abgeführt und einem Messsystem zugeführt. Die Schwierigkeit dabei ist, dass für jedes Fahrzeug, jedes Rad und jede Bremse eine eigene Einhausung hergestellt werden muss. Um die Einhausung im Radkasten unterbringen zu können kann es notwendig sein, die Radachse zu verlängern. Abgesehen davon müssen die Zu- und Abluft im Radkasten geführt werden, in dem ohnehin wenig Platz vorhanden ist und der schwer zugänglich ist. Oftmals wird daher der Unterboden des Fahrzeugs durchbohrt, um Zuluft und Abluft zur Bremse führen zu können. Diese Vorrichtung ist daher aufwendig in der praktischen Anwendung. Zusätzlich ist hier anzumerken, dass durch die aktiv zugeführte Luft die Systemtemperatur beeinflusst wird, was sich aufgrund der ausgeprägten Temperaturabhängigkeit des Bremsenabriebs auf die Messung und deren Ergebnisse auswirken kann.

In der DE 10 2017 200 941 B4 wird eine Vorrichtung zur Messung der Bremspartikelemissionen beschrieben, bei der auf den Außenring der Radfelge ein Staubsammeltrichter befestigt wird, der die ganze Außenseite der Felge umgibt und sich mit der Felge mitdreht. Über den Staubsammeltrichter wird partikelbeladene Luft abgesaugt und einer Partikelmessung zugeführt. Die Radfelge ist felgeninnenseitig nicht abgedichtet, womit es nicht möglich ist, in der partikelbeladenen Abluft den Bremsabrieb vom Reifen- oder Straßenabrieb oder Umgebungsstaub zu trennen. Das verhindert eine zuverlässige Quantifizierung und Klassifizierung des Bremsenabriebs. Abgesehen davon ändern sich bei dieser Vorrichtung die Strömungsverhältnisse mit der geometrischen Form der gemessenen Radfelge, weshalb ein Vergleich des Bremsenabriebes zwischen verschiedenen Fahrzeugen oder Radfelgen kaum möglich ist. Nicht zuletzt kann es durch den Staubsammeltrichter und die fehlende Luftzirkulation auch zu einer Überhitzung innerhalb der Felge kommen, was die Messung der Partikelemission beeinflussen kann, weil die Partikelemission stark von der Temperatur abhängig ist.

Ein teilweiser Abschluss der Felge, wie in der DE 10 2017 006 349 A1 oder der DE 10 2017 200 941 B4 beeinflusst jedenfalls die ansonsten in der Felge vorherrschenden Bedingungen, insbesondere im Bereich der Bremse. Die auf diese Weise erfasste und gemessene Partikelemission durch Bremsabrieb kann damit von real vorkommenden Bremsabrieb abweichen, was die Zuverlässigkeit der Messung in Frage stellt.

Es ist eine Aufgabe der gegenständlichen Erfindung, eine zuverlässige Quantifizierung und Klassifizierung des Bremsenabriebs einer Bremsanlage eines Fahrzeuges zu ermöglichen, und gleichzeitig den Aufwand in der praktischen Anwendung zu reduzieren.

Diese Aufgabe wird durch eine eingangs genannte Messfelge erfindungsgemäß dadurch gelöst, dass im Felgeninnenraum ein sich in Umfangsrichtung der Messfelge über einen Erstreckungswinkel erstreckendes Sammelgehäuse angeordnet ist, im Sammelgehäuse ein Sammelgehäuseinnenraum ausgebildet ist und das Sammelgehäuse an einer radial inneren, sich in Umfangsrichtung der Messfelge erstreckenden Umfangsfläche zum Sammelgehäuseinnenraum hin zumindest teilweise geöffnet ist, an der Messfelge am Felgenflansch ein Abführraum vorgesehen ist und an der Messfelge ein Sammelkanal vorgesehen ist, der den Sammelgehäuseinnenraum des Sammelgehäuses mit dem Abführraum verbindet. Mit einem derartigen Sammelgehäuse kann der Einfluss der Sammlung des Bremsabriebs weitestgehend reduziert werden. Insbesondere werden damit weder die übliche Kühlung der Bremsanlage, und damit die Temperatur im Bereich der Bremsanlage, noch die Strömung im Bereich der Bremsanlage übermäßig beeinflusst, sodass die gesammelten Bremspartikel realitätsnahe sind. Hierfür bedarf es entweder gar keiner Adaptierungen einer Standardfelge, oder lediglich minimale Adaptierungen, sodass der Aufwand für die Umsetzung der Sammlung des Bremsabriebs minimal ist.

Günstigerweise beträgt der Erstreckungswinkel zwischen 100° und 180°. Vorzugsweise beträgt der Erstreckungswinkel zwischen 100° und 130°.

Es ist vorteilhaft, wenn sich ein dem Sammelgehäuseinnenraum abgewandtes Ende des Sammelkanals eine vorgegebene Länge in Umfangsrichtung des Sammelgehäuses erstreckt. Damit kann durch die Gestaltung und Dimensionierung des Sammelkanals gezielt auf die Sammlung des Bremsabriebs Einfluss genommen werden und die Führung des Bremsabriebes, insbesondere um die Partikelverluste zur minimieren, gezielt ausgelegt werden. Hier ist es auch denkbar, dass sich der Querschnitt des Sammelkanals in Umfangsrichtung verändert, insbesondere in Drehrichtung abnimmt, um den Partikelverlust zu reduzieren. Der Rest des an den Sammelkanal anschließenden Umfangs, kann entlang des Umfangs verschlossen sein, um Partikelverluste zu verhindern.

Besonders vorteilhaft, wird eine am Felgenflansch zentral innen ausgebildete Mittenausnehmung als Abführraum verwendet. Mit anderen Worten ist am Felgenflansch zentral innen eine Mittenausnehmung vorgesehen, die den Abführraum ausbildet. Ein solche Mittenausnehmung ist bei jeder Standardfelge vorhanden und bietet Raum, um darüber den gesammelten Bremsabrieb abzuführen.

Dazu kann am Felgenflansch zumindest eine radiale Ausnehmung vorgesehen sein, die den Felgeninnenraum mit der Mittenausnehmung verbindet, indem die radiale Ausnehmung an der radial äußeren Umfangsfläche des Felgenflansches im Bereich des Felgenflansches, der in den Felgeninnenraum ragt, mündet und radial innen in der Mittenausnehmung mündet und dass der Sammelkanal an der äußeren Umfangsfläche des Felgenflansches im Bereich der Mündung der zumindest einen radialen Ausnehmung endet, um den Abführraum mit dem Sammelgehäuseinnenraum zu verbinden. Hierfür sind an der Messfelge lediglich die radialen Ausnehmungen am Felgenflansch vorzusehen, was mit geringem Aufwand realisiert werden kann.

Ohne Adaptierung einer Standardfelge kommt man aus, wenn an einem im Felgeninnenraum liegenden axialen Ende des Felgenflansches oder außen an der Felgenstirnfläche eine Sammelscheibe angeordnet ist, in der ein Hohlraum vorgesehen ist und der Hohlraum den Abführraum, zumindest teilweise, ausbildet und der Hohlraum mit dem Sammelkanal verbunden ist. Konstruktiv einfach ist es, wenn an der Sammelscheibe an einer radial äußeren Umfangsfläche und/oder an einer Stirnfläche zumindest eine Öffnung zum Hohlraum vorgesehen ist und wenn der Sammelkanal im Bereich der zumindest einen Öffnung endet, um den Hohlraum mit dem Sammelgehäuseinnenraum zu verbinden.

Vorteilhafter und konstruktiv einfach weist die Sammelscheibe eine erste Sammelscheibenplatte und eine zweite Sammelscheibenplatte auf, die zur Ausbildung des Hohlraumes axial voneinander beabstandet angeordnet sind, wobei an der erste Sammelscheibenplatte eine zentral innen liegende Ausnehmung vorgesehen ist, die mit dem Hohlraum verbunden ist. Dabei ist es vorteilhaft, wenn die Ausnehmung der ersten Sammelscheibenplatte in der Mittenausnehmung der Messfelge angeordnet ist, weil dann der Bremsabrieb wieder über die Mittenausnehmung abgeführt werden kann. Alternativ ist an der Sammelscheibe zumindest ein Verbindungskanal angeordnet, der mit dem Hohlraum verbunden ist, wobei der Verbindungskanal in eine Umfangsnut eines Verbindungsrings mündet und der Sammelkanal im Bereich der Umfangsnut endet, um den Hohlraum über den Verbindungskanal und den Verbindungsring mit dem Sammelgehäuseinnenraum zu verbinden. Diese Ausführung ermöglicht es insbesondere auch, die Sammelscheibe an der Felgenstirnfläche anzuordnen, womit eine Spurverbreiterung an der Achse durch eine felgeninnenseitige Sammelscheibe vermieden werden kann.

Zur Abführung des Bremsabriebes von der Messfelge ist an dieser vorteilhafterweise eine Drehdurchführung vorgesehen, die mit dem Abführraum verbunden ist. Besonders einfach lässt sich das umsetzen, wenn in der Mittenausnehmung als Drehdurchführung ein hohler Abführstutzen drehbar gelagert angeordnet ist.

Eine erfindungsgemäße Messfelge wird vorteilhaft zum Erfassen des Bremsabriebs einer Bremseinrichtung eines Fahrzeugrades eingesetzt, wobei das Sammelgehäuse der Messfelge zumindest teilweise einen beweglichen, mit dem Fahrzeugrad rotierenden, Bremsenteil der Bremseinrichtung umgibt, indem der bewegliche Bremsenteil in den Sammelgehäuseinnenraum ragt. Das Sammelgehäuse kann durch die Öffnung an der radial inneren Umfangsfläche einfach über einen beweglichen Bremsenteil, z.B. eine Bremsscheibe gestülpt werden, wodurch die Messfelge einfach in der Anwendung ist.

Die Aufgabe der Erfindung wird außerdem durch eine eingangs genannte Anordnung zum Erfassen des Bremsabriebs einer Bremseinrichtung eines Fahrzeugrades gelöst, wobei das Fahrzeugrad eine oben beschriebene Messfelge aufweist und das Sammelgehäuse der Messfelge zumindest teilweise einen beweglichen Bremsenteil der Bremseinrichtung umgibt, in dem der bewegliche Bremsenteil in den Sammelgehäuseinnenraum ragt.

Vorzugsweise wird dabei der Bremsabrieb aus dem Abführraum über eine Abführleitung zu einer Messeinrichtung geführt.

In einer weiteren Variante wird im Abführraum oder in einem mit dem Abführraum verbundenen Mittenausnehmung ein Filtereinsatz angeordnet, in dem Bremsabrieb gesammelt wird.

Die gegenständliche Erfindung wird nachfolgend unter Bezugnahme auf die Figuren 1 bis 14 näher erläutert, die beispielhaft, schematisch und nicht einschränkend vorteilhafte Ausgestaltungen der Erfindung zeigen. Dabei zeigt
Fig. 1 und 2 eine erfindungsgemäße Messfelge in unterschiedlichen Ansichten,
Fig. 3 die Anordnung der erfindungsgemäßen Messfelge an einer Bremseinrichtung,
Fig. 4 bis 6 eine erste Ausgestaltung einer erfindungsgemäßen Messfelge,
Fig. 7 eine Ausführung, bei der das Sammelgehäuse eine Bremsscheibe nur an einer Seite umgibt,
Fig. 8 und 9 eine weitere Ausgestaltung einer erfindungsgemäßen Messfelge,
Fig. 10 bis 12 eine weitere Ausgestaltung einer erfindungsgemäßen Messfelge,
Fig. 13 eine erfindungsgemäße Messfelge mit einem Sammelkanal im Felgeninnenraum zur Abführung über einen Radkasten eines Fahrzeugs und
Fig. 14 eine Messfelge mit einem Partikelfilter in einer Mittenausnehmung der Messfelge zum Sammeln des Bremsabriebes.

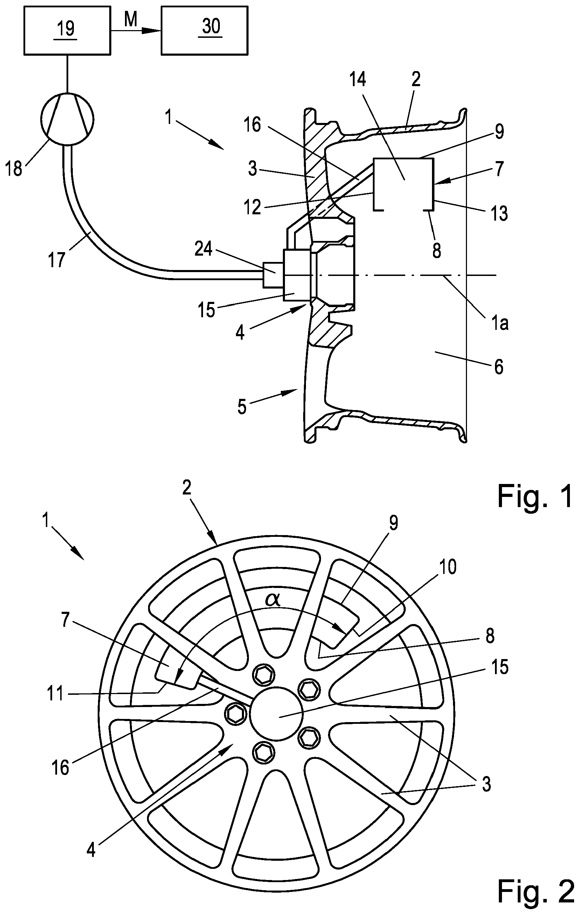

In Fig. 1 (Schnittdarstellung) und Fig. 2 (Seitenansicht) ist eine erfindungsgemäße Messfelge 1 mit einer Drehachse 1a dargestellt. Die Messfelge 1 ist zusammen mit einem Reifen (nicht dargestellt) zur Montage als Fahrzeugrad an einem Fahrzeug geeignet, bei Bewegung dieses Fahrzeugs drehen sich dann das Fahrzeugrad und die Messfelge 1 entsprechend um die Drehachse 1a. Die Messfelge 1 besteht aus einer hinsichtlich der Drehachse 1a radial außen liegenden Felgenumfangsfläche 2, die als Reifenauflagefläche zur Ausbildung eines Fahrzeugrades dient, einer Anzahl von Speichen 3 und einem zentral innen innenliegenden Felgenflansch 4. Der Felgenflansch 4 befindet sich unmittelbar benachbart zur Drehachse 1a. Die Speichen 3 - es ist zumindest eine oder, wie im dargestellten Ausführungsbeispiel, mehrere vorgesehen - verbinden in bekannter Weise an einer Felgenstirnfläche 5 (die im bestimmungsgemäßen Einsatz der Messfelge 1 die Außenseite des Fahrzeugrades ausbildet) den Felgenflansch 4 mit der Felgenumfangsfläche 2. Die Messfelge 1 ist üblicherweise an der der Felgenstirnfläche 5 gegenüberliegenden Stirnfläche (diese ist im bestimmungsgemäßen Einsatz der Messfelge zum Radkasten eines Fahrzeugs hin orientiert) offen. Zwischen der Felgenumfangsfläche 2, den Speichen 3 und dem Felgenflansch 4 ist damit ein Felgeninnenraum 6 ausgebildet. Insbesondere ist der Felgeninnenraum 6 zwischen der der Drehachse 1a zugewandten Innenseite der Felgenumfangsfläche 2 und den bei bestimmungsgemäßem Einsatz der Messfelge 1 in Richtung des Radkastens orientierten Oberflächen der Speichen 3 und des Felgenflansches 4 ausgeführt.

Im Felgeninnenraum 6 der Messfelge 1 ist ein Sammelgehäuse 7 angeordnet, das sich in Umfangsrichtung der Messfelge 1 über einen vorgegebenen Erstreckungswinkel a erstreckt und das einen Sammelgehäuseinnenraum 14 ausbildet. Die Umfangsrichtung der Messfelge 1 verläuft dabei rund um die Drehachse 1a. Der Erstreckungswinkel α beträgt vorteilhaft zwischen 100 und 180°. Der Erstreckungswinkel α ist vorzugsweise kleiner als 130°, damit die Luftströmung im Bereich der Messfelge 1 nicht zu stark von den ansonsten am Fahrzeug auftretenden Verhältnissen abweicht, was auch die Kühlung der Bremsenteile negativ beeinflussen könnte.

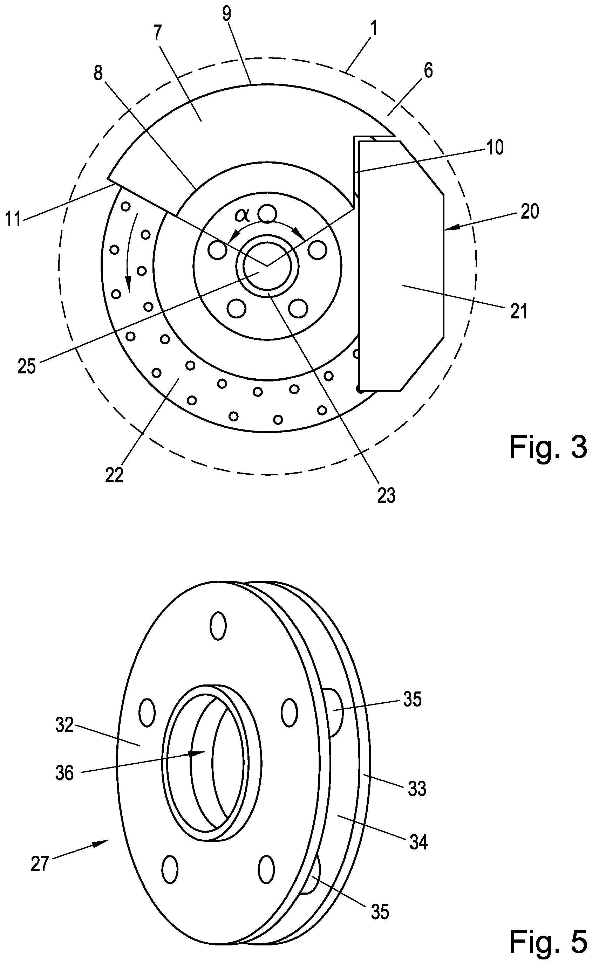

Im bestimmungsgemäßen Einsatz einer Messfelge 1 sind im Felgeninnenraum 6 üblicherweise eine Radnabe 23 zum Verbinden der Messfelge 1 mit einer (angetriebenen oder nicht angetriebenen) Achse 25 eines Antriebsstranges eines Fahrzeugs und die Bremseinrichtung 20 (beispielhaft in Fig. 3 dargestellt), beispielsweise eine bekannte Schwimmsattelscheibenbremse mit Bremssattel 21 und Bremsscheibe 22), angeordnet. Die Messfelge 1 kann an allen Achs- und Radaufhängungsvarianten eingesetzt werden, beispielsweise an einer Halbachse, einer Starrachse, einer Halbstarrachse, einer Verbundlenkerachse, einer Einzelradaufhängung usw.

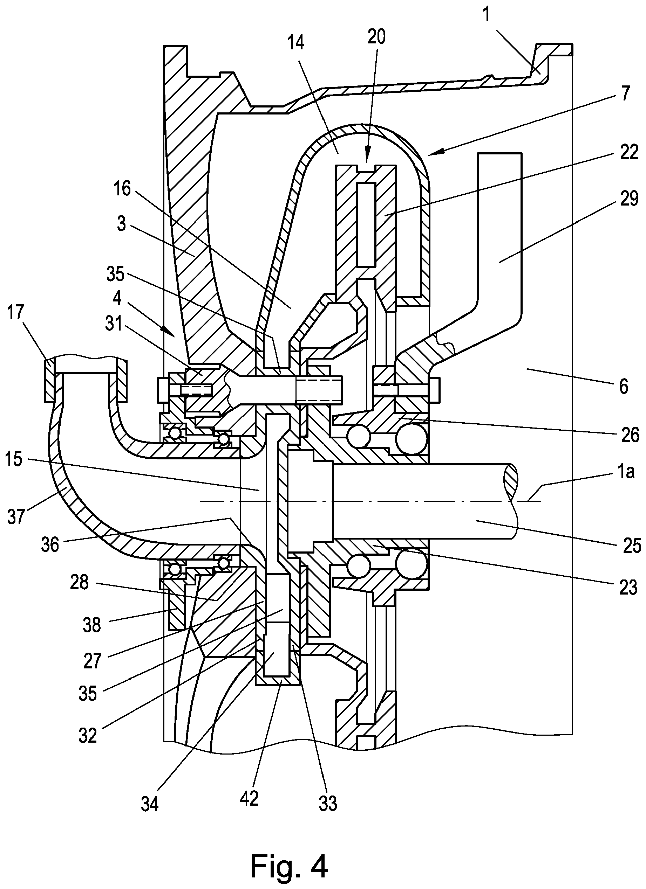

Die Messfelge 1 wird üblicherweise über den Felgenflansch 4 mittels Radschrauben 31 (üblicherweise an einem Lochkreis des Felgenflansches 4 über den Umfang verteilt angeordnete Radschrauben) mit der Radnabe 23 verbunden, die mittels eines Radlagers 26 drehbar gelagert ist (z.B. Fig. 3 oder Fig. 4). Die Radnabe 23 ist über eine Wellen-Nabenverbindung mit der Achse 25 verbunden und das Radlager 26, konkret der drehfeste Teil des Radlagers 26, ist an einem drehfesten Bauteil des Fahrzeugs, beispielsweise Radträger 29 einer Radaufhängung, angeordnet. Der bewegte Teil der Bremseinrichtung, beispielsweise die Bremsscheibe 22, ist ebenfalls mit der Radnabe 23 verbunden und dreht sich somit mit der Radnabe 23 mit.

Das Sammelgehäuse 7 besteht aus einer inneren, sich in Umfangsrichtung der Messfelge 1 erstreckende Gehäuseumfangsfläche 8, einer äußeren, sich in Umfangsrichtung der Messfelge 1 erstreckende Gehäuseumfangsfläche 9, Gehäuseseitenflächen 12, 13 und Gehäusestirnflächen 10, 11, die zusammen die Begrenzung des Sammelgehäuseinnenraumes 14 des Sammelgehäuses 7 ausbilden. Die Gehäuseumfangsflächen 8, 9 sind durch die beiden Gehäuseseitenflächen 12, 13 und die beiden Gehäusestirnflächen 10, 11, die die in Umfangsrichtung liegenden Enden des Sammelgehäuses 7 ausbildenden, miteinander verbunden. Durch die

Gehäusestirnflächen 10, 11 wird auch der Erstreckungswinkel α festgelegt. Zumindest eine Gehäusestirnfläche 10, 11 ist vorzugsweise zumindest teilweise offen ausgeführt. Ebenso ist die innere Gehäuseumfangsfläche 8 vorzugsweise zumindest teilweise offen ausgeführt.

An der Messfelge 1 ist am Felgenflansch 4 ein Abführraum 15 vorgesehen. Der Abführraum 15 kann einstückig mit dem Felgenflansch 4 ausgeführt sein oder integral mit dem Felgenflansch 4 verbunden sein. Der Abführraum 15 ist durch einen Sammelkanal 16 mit dem Sammelgehäuseinnenraum 14 verbunden. Der Sammelkanal 16 stellt eine Fluidverbindung zwischen dem Sammelgehäuseinnenraum 14 und dem Abführraum 15 her.

Nachdem sich die Messfelge 1 im Betrieb dreht, kann eine geeignete Drehdurchführung 24 vorgesehen sein, die mit dem Abführraum 15 in Verbindung steht. Solche Drehdurchführungen sind hinlänglich bekannt. Die Drehdurchführung 24 dient dazu, den Bremsabrieb aus dem rotierenden Abführraum 15 in eine gegenüber dem Abführraum 15 drehfeste Abführleitung 17 überzuführen.

Die Messfelge 1 wird zum Sammeln von Bremsabrieb einer Bremseinrichtung 20 verwendet, beispielsweise einer Betriebsbremse eines Fahrzeugs, beispielsweise in Form einer Schwimmsattelscheibenbremse mit einer Bremsscheibe 22 und einem Bremssattel 21 mit Bremsbelägen, die zum Bremsen gegen die Bremsscheibe 22 gepresst werden. Das ist beispielsweise in Fig. 3 dargestellt, wobei von der Messfelge 1 aus Gründen der Übersichtlichkeit nur das Sammelgehäuse 7 dargestellt ist. Die Messfelge 1 kann auf einem Prüfstand eingesetzt werden oder im realen Fahrbetrieb des Fahrzeugs auf einem Verkehrsweg, z.B. einer Straße oder einem Testgelände. Für den Einsatz auf einem Verkehrsweg im realen Fahrbetrieb eines Fahrzeugs oder für den Einsatz auf einem Rollenprüfstand für ein Fahrzeug ist die Messfelge 1 natürlich Teil eines Fahrzugrades mit einem Fahrzeugreifen auf der Messfelge 1. Für einem Einsatz auf einem Antriebsstrangprüfstand oder Bremsenprüfstand muss nicht zwingend ein Fahrzeugreifen auf der Messfelge 1 angeordnet sein.

Das Sammelgehäuse 7 dient zum Sammeln von Bremsabrieb der Bremseinrichtung 20 im Sammelgehäuseinnenraum 14. Der Bremsabrieb, in Form von festen und/oder volatilen Bremspartikeln des feststehenden und/oder bewegten Bremsenteils, liegt dabei im Sammelgehäuseinnenraum 14 als Aerosol vor. Das Aerosol ist im Wesentlichen mit Bremspartikeln beladene Luft. Der gesammelte partikelbeladene Volumenstrom wird über den Sammelkanal 16 zum Abführraum 15 geführt, von wo der Bremsabrieb über eine Abführleitung 17 zu einer Messeinrichtung 19 geführt wird. In der Abführleitung 17 kann eine Abführpumpe 18 angeordnet sein, um den Bremsabrieb aus dem Sammelgehäuseinnenraum 14 über den Sammelkanal 16 und den Abführraum 15 abzusaugen und der Messeinrichtung 19 zuzuführen. Es kann auch vorgesehen sein, dass stromaufwärts der Pumpe 18 eine Entnahmestelle für die Entnahme von Bremsabrieb für die Messeinrichtung 19 vorgesehen ist. Das Sammelgehäuse 7 ist vorzugsweise in Drehrichtung (in Fig. 3 durch Pfeil angedeutet) gesehen nach der Bremseinrichtung 20 angeordnet, vorzugsweise an die Bremsanlage 20 anschließend. Das Sammelgehäuse 7 umgibt vorzugsweise den bewegten Bremsenteil, beispielsweise eine Bremsscheibe 22, der Bremseinrichtung 20 zumindest teilweise, d.h., dass der bewegte Bremsenteil teilweise im Sammelgehäuse 7 angeordnet ist. Der bewegte Bremsenteil rotiert üblicherweise mit der Messfelge 1 bzw. einem Fahrzeugrad mit einer Messfelge 1 mit. Bremsabrieb gelangt so durch die Rotation des bewegten Bremsenteils in den Sammelgehäuseinnenraum 14 und kann von dort abgeführt wird. Auf diese Weise kommt es zu wenig Verlusten des Bremsabriebs.

Selbstverständlich kann aber auch eine andere Bremseinrichtung 20 als eine Schwimmsattelscheibenbremse vorgesehen sein, beispielsweise eine Festsattelbremse, eine Trommelbremse usw. Obwohl vorteilhaft, muss der bewegte Bremsenteil, insbesondere eine Bremsscheibe 22, nicht zwingend zumindest teilweise im Sammelgehäuse 7 angeordnet sein, wenn der Bremsabrieb auf andere Weise in das Sammelgehäuse 7 gelangen kann oder in dieses geleitet wird.

Die Messeinrichtung 19 kann beliebig ausgeführt sein, beispielsweise als hinlänglich bekanntes Partikelmessgerät, und kann als Messgröße M beliebige Charakteristika des Bremsabriebes erfassen, beispielsweise eine Bremspartikelanzahl, eine Bremspartikelgrößenverteilung, einer Bremspartikelmasse, eine Bremspartikelzusammensetzung usw. Messeinrichtungen zu diesem Zweck sind hinreichend bekannt und können beispielsweise nach dem Prinzip der Kondensationspartikelvergrößerung oder nach dem Diffusionsaufladungsprinzip arbeiten. Es können natürlich auch mehrere verschiedene Messeinrichtungen 19 vorgesehen sein, um verschiedene Charakteristika des Bremsabriebes zu erfassen.

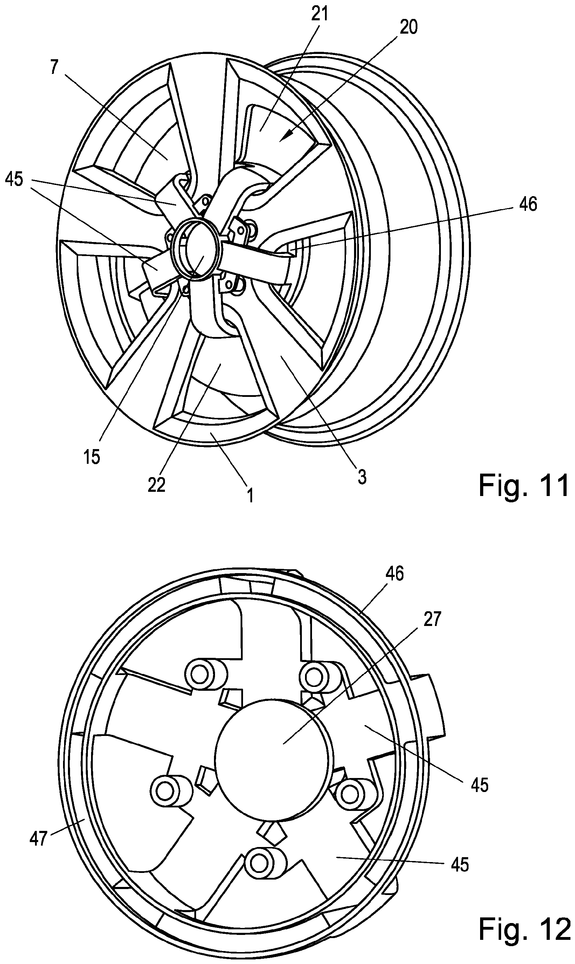

Stromauf der Messeinrichtung 19 kann bedarfsweise auch noch eine bekannte Aufbereitung des aus dem Sammelgehäuseinnenraum 14 abgeführten Aerosols vorgesehen sein, beispielsweise eine Verdünnung des Aerosolstroms mit einem partikelfreien Gas, eine Abzweigung eines definierten Messvolumenstromes zur Messung oder eine Entfernung flüchtiger Partikel im Aerosol ("Volatile Particle Remover"), wobei auch mehrere solcher Aufbereitungsschritte vorgesehen sein können. Auch eine zumindest abschnittsweise Temperierung der Abführleitung 17 und/oder einer Abführpumpe 18 auf eine vorgegebene Temperatur ist möglich. Mittels der Messeinrichtung 19 kann die Messgröße M entweder integral (über einen definierten Zyklus, beispielsweise in Form einer Messgröße über einer bestimmten Zeitspanne oder einer bestimmten Testfahrt mit einem Fahrzeug) oder zeitaufgelöst (vorzugsweise in vorgegebenen Zeitschritten) ermittelt werden. Die Messeinrichtung 19 kann die ermittelte Messgröße M auch an eine Auswerteeinheit 30 (Computerhardware und/oder Software) zur Auswertung oder Speicherung senden. Anhand der Fign. 4 bis 14 werden nachfolgend vorteilhafte Ausgestaltungen der Messfelge 1 beschrieben. In den Figuren sind gleiche Teile mit denselben Bezugszeichen versehen. Aus Gründen der Übersichtlichkeit sind aber nicht immer in allen Figuren alle wiederholt vorkommenden Teile mit Bezugszeichen versehen.

Fig. 4 zeigt eine erfindungsgemäße Messfelge 1, die in diesem Ausführungsbeispiel in üblicher Weise an einem Radträger 29 eines Fahrzeugs (nicht dargestellt) angeordnet ist. Der Radträger 29 ist beispielsweise Teil einer Radaufhängung des Fahrzeugs und bildet einen drehfesten Bauteil aus. Am Radträger 29 ist das Radlager 26 bzw. der drehfeste Teil des Radlagers 26 angeordnet. Beispielsweise sind Lagerschrauben (nicht dargestellt) vorgesehen, um das Radlager 26 am Radträger 29, oder einem anderen drehfesten Bauteil des Fahrzeugs, anzuordnen. Am Radlager 26 ist die Radnabe 23 drehbar gelagert angeordnet. In der Ausführung nach Fig. 4 ist die Radnabe 23 als drehbarer Teil des Radlagers 26 ausgeführt. Die Radnabe 23 kann mit einer Achse 25 verbunden sein, wie in Fig. 4 dargestellt. An der Radnabe 23 ist eine Bremsscheibe 22, als bewegliches Bremsenteil, angeordnet, beispielsweise mit geeigneten Schraubverbindungen. Die Bremsscheibe 22 dreht sich somit mit der Radnabe 23 mit. Über Radschrauben 31 ist die Messfelge 1 mit der Radnabe 23 verbunden.

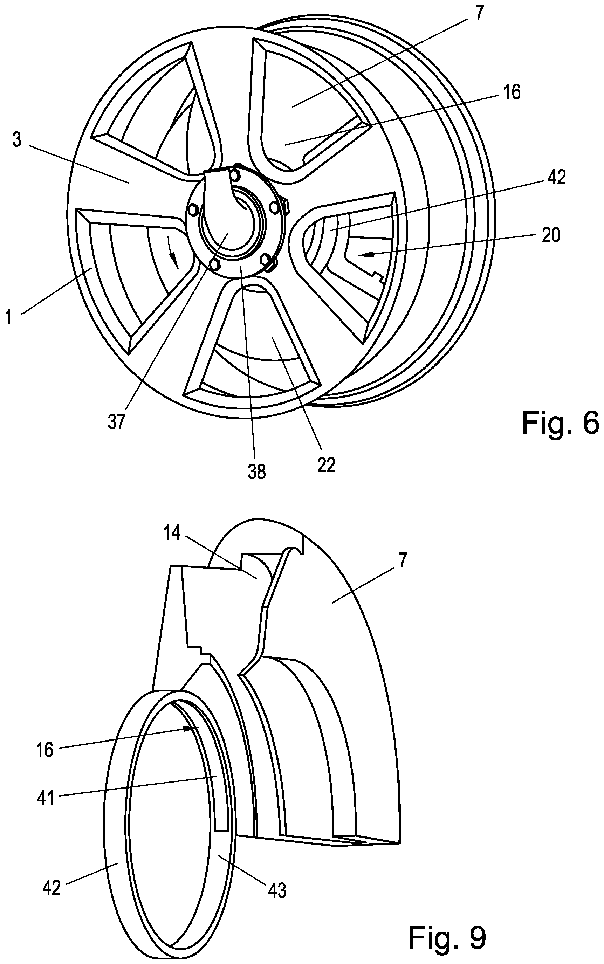

Das Sammelgehäuse 7 der Messfelge 1 ist zum Teil über die Bremsscheibe 22 gestülpt (siehe auch Fig. 6), sodass die Bremsscheibe 22 teilweise im Sammelgehäuse 7 angeordnet ist. Bei Bewegung der Messfelge 1 rotiert der bewegte Bremsenteil der Bremsanlage 20, hier die Bremsscheibe 22, im Sammelgehäuse 7. Das Sammelgehäuse 7 mit dem Sammelkanal 16 ist an einem relativ zur Messfelge 1 drehfesten Bauteil des Fahrzeugs angeordnet, beispielsweise am Radträger 29, am drehfesten Teil des Radlagers 26 oder am drehfesten Teil der Bremseinrichtung 20 (beispielsweise an einem Bremssattel), und dreht sich somit nicht mit der Messfelge 1 mit. Das Sammelgehäuse ist in Drehrichtung nach dem drehfest angeordneten Teil der Bremseinrichtung 20 (hier dem Bremssattel 21) angeordnet (siehe Fig. 3).

Zwischen dem Felgenflansch 4 und der Radnabe 23 ist eine Sammelscheibe 27 (in Fig. 5 im Detail dargestellt) angeordnet, beispielsweise über die Radschrauben 31. Die Sammelscheibe 27 liegt somit axial am im Felgeninnenraum 6 liegenden axialen Ende des Felgenflansches 4 an. In dieser Ausführung kann eine Standardfelge verwendet werden, die nicht adaptiert werden muss. In der Sammelscheibe 27 ist ein Hohlraum 34 vorgesehen, der den Abführraum 15 der Messfelge 1 ausbildet.

Die Sammelscheibe 27 kann aus einer ersten Sammelscheibenplatte 32 und einer zweiten Sammelscheibenplatte 33 bestehen, die axial beabstandet voneinander angeordnet sind. Zur axialen Beabstandung können Verbindungsstege 35 vorgesehen sein, durch die Radschrauben 31 durchgeführt sind.

Die Sammelscheibe 27 kann an der äußeren Umfangsfläche zumindest teilweise offen ausgeführt sein, wodurch der Hohlraum 34 mit der äußeren Umfangsfläche verbunden ist. Der Sammelkanal 16 endet in dieser Ausführung im Bereich der äußeren Umfangsfläche der Sammelscheibe 27. Zwischen der ersten Sammelscheibenplatte 32 und der zweiten Sammelscheibenplatte 33 bildet sich demnach der Hohlraum 34 aus, der über die äußere Umfangsfläche der Sammelscheibe 27 mit dem Sammelkanal 16 verbunden ist. Vorzugsweise erstreckt sich der Sammelkanal 16 in Umfangsrichtung über den äußeren Umfang der Sammelscheibe 27 (wie in Fign. 4 und 6 dargestellt) und verschließt die Sammelscheibe 27 am dem Sammelgehäuse 7 anschließenden Umfang nach außen, um eine möglichst verlustfreie Abführung des Bremsabriebs zu ermöglichen. Die erste Sammelscheibenplatte 32 ist dem Felgenflansch 4 zugewandt angeordnet und hat im zentral inneren Bereich eine Ausnehmung 36. Die Sammelscheibe 27 mit dem Hohlraum 34 bildet somit den Abführraum 15 der Messfelge 1 aus, der über die Ausnehmung 36 zugänglich ist.

In einer alternativen Ausführung ist die Sammelscheibe 27 an der radial äußeren Umfangsfläche verschlossen. Um den Sammelkanal 16 mit dem Hohlraum 34 der Sammelscheibe 27 zu verbinden, kann an einer axialen Stirnfläche der Sammelscheibe 27, also beispielsweise in der ersten Sammelscheibenplatte 32 oder der zweiten Sammelscheibenplatte 33, zumindest eine Öffnung zum Hohlraum 34 vorgesehen sein, vorzugsweise mehrere über den Umfang verteilt angeordnete Öffnungen. Der Sammelkanal 16 würde dann in Bereich dieser Öffnungen an der Sammelscheibe 27 führen. Auch eine Kombination einer zumindest teilweise offenen radial äußeren Umfangsfläche und zumindest einer Öffnung an einer axialen Stirnfläche der Sammelscheibe 27 ist denkbar. Der Sammelkanal 16 ist dann entsprechend auszubilden.

In Fig. 4 ist auch eine mögliche Anbindung der Abführleitung 17 an den Abführraum 15 zum Abführen des gesammelten Bremsabriebs dargestellt. Die Ausnehmung 36 der Sammelscheibe 27 ist in der Mittenausnehmung 28 der Messfelge 1 angeordnet. Ein hohler Abführstutzen 37 ist drehbar gelagert in der Mittenausnehmung 28 angeordnet. Dazu kann ein drehbarer Teil eines Stutzenlagers 38 an der Messfelge 1 befestigt sein und der Abführstutzen 37 mit einem relativ zur Messfelge 1 drehfesten Teil des Stutzenlagers 38 verbunden sein, oder den drehfesten Teil des Stutzenlagers 38 ausbilden (wie in Fig. 4). Auf diese Weise wird eine Drehdurchführung 24 geschaffen, mit der Bremsabrieb aus dem rotierenden Abführraum 15 der Messfelge 1 über den gegenüber der Messfelge 1 drehfesten Abführstutzen 37 abgeführt werden kann. Eine solche Drehdurchführung 24 kann aber natürlich auch auf beliebige andere Weise ausgeführt sein. Insbesondere muss der Abführstutzen 37 nicht zwingend axial an der Sammelscheibe 27 anliegen.

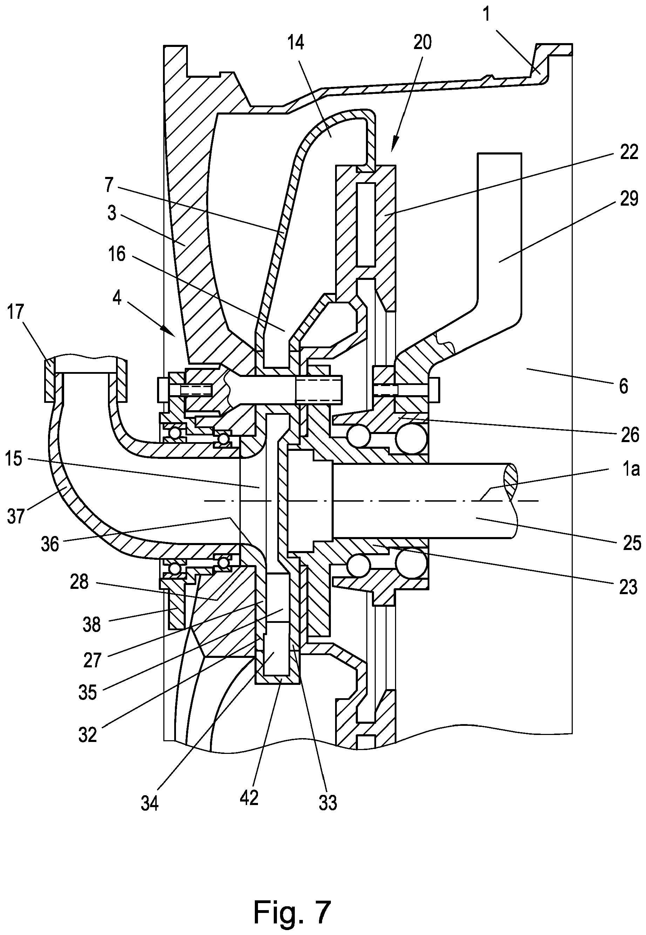

Fig. 7 zeigt eine Variante der Messfelge 1 nach Fign. 4 bis 6 mit einem Sammelgehäuse 7, das den beweglichen Bremsenteil, hier die Bremsscheibe 22, an nur einer Seite zumindest teilweise umgibt. Ansonsten ist die Ausführung wie oben beschrieben.

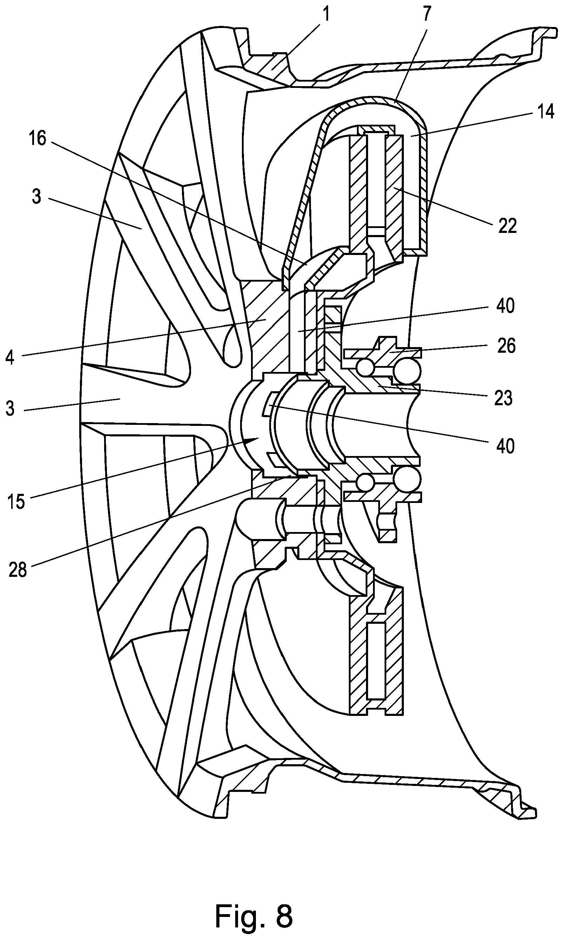

Mit Fig. 8 wird eine weitere Ausgestaltung einer erfindungsgemäßen Messfelge 1 erläutert. In diesem Ausführungsbeispiel fungiert die Mittenausnehmung 28 der Messfelge 1 als Abführraum 15 zur Abführung des Bremsabriebs. Hierzu sind am Felgenflansch 4 über den Umfang verteilt eine Anzahl radialer Ausnehmungen 40 vorgesehen, die die Mittenausnehmung 28 mit der radial äußeren Umfangsfläche des Felgenflansches 4 im Bereich des Felgeninnenraumes 6 verbindet. Die zumindest eine radiale Ausnehmung 40 mündet an der radial äußeren Umfangsfläche im Bereich des Felgenflansches 4, der in den Felgeninnenraum 6 ragt. Radial innen mündet die radiale Ausnehmung 40 in der Mittenausnehmung 28. Das Sammelgehäuse 7 mit dem Sammelkanal 16 ist wieder drehfest in der Messfelge 1 angeordnet. Der Sammelkanal 16 endet an der äußeren Umfangsfläche des Felgenflansches 4 im Bereich der Mündungen der Anzahl der radialen Ausnehmungen 40 und verbindet somit den Sammelgehäuseinnenraum 14 mit der zumindest einen in die äußere Umfangsfläche des Felgenflansches 4 mündende Ausnehmung 40. An der äußeren Umfangsfläche des Felgenflansches 4 könnte auch eine Umfangsnut vorgesehen sein, in die der Sammelkanal 16 und die radialen Ausnehmungen 40 münden. Der Sammelkanal 16 kann sich ähnlich wie in Fig. 7 aber auch in Umfangsrichtung um den Felgenflansch 4 herum erstrecken.

In der Ausführung nach Fig. 8 erstreckt sich der Sammelkanal 16 in Umfangsrichtung über eine vorgegebene Länge der Erstreckung des Sammelgehäuses 7 in Umfangsrichtung, wie in Fig. 9 dargestellt. In gleicher Weise kann sich der Sammelkanal 16 in einer Ausführung nach Fig. 4 oder Fig. 7 in Umfangsrichtung erstrecken. An der radial inneren Umfangsfläche 43 des Sammelkanals 16 ist eine Ausnehmung 41 vorgesehen, über die der Sammelkanal 16 mit der Umfangsfläche des Felgenflansches 4 verbunden ist. Über den restlichen Umfang und an die innere Umfangsfläche 43 des Sammelkanals 16 anschließend kann sich ein Abschlussring 42 erstrecken, der an der äußeren Umfangsfläche des Felgenflansches 4 anliegt und die radialen Ausnehmungen 40 in diesem Bereich nach außen verschließt. In gleicher Weise kann auch in einer Ausführung nach Fig. 4 oder Fig. 7 ein solcher Abschlussring 42 vorgesehen sein. Dieser Abschlussring 42 könnte mit U-förmig ausgebildeten Querschnitt ausgeführt sein, wie in Fig. 4 oder 7. Mit einer Umfangsnut an der äußeren Umfangsfläche des Felgenflansches 4 oder einem Abschlussring 42 mit U-förmigem Querschnitt kann die Abführung des Bremsabriebs verbessert, insbesondere der Bremsabriebverlust reduziert werden.

Der Bremsabrieb kann daher über den Sammelkanal 16, die radialen Ausnehmungen 40 und die Mittenausnehmung 28 abgeführt werden. Hierfür kann an der Mittenausnehmung eine geeignete Drehdurchführung vorgesehen sein, beispielsweise wie oben beschrieben.

Auch in der Ausgestaltung nach Fig. 8 ist es möglich, dass das Sammelgehäuse 7 nur über eine Seite des beweglichen Bremsenteils (hier die Bremsscheibe 22) gestülpt ist (so wie in Fig. 7). Ebenso ist es möglich, in der Ausgestaltung nach der Fig. 8 in der Mittenausnehmung 28 einen Abführstutzen 37 wie zu Fig. 4 erläutert anzuordnen.

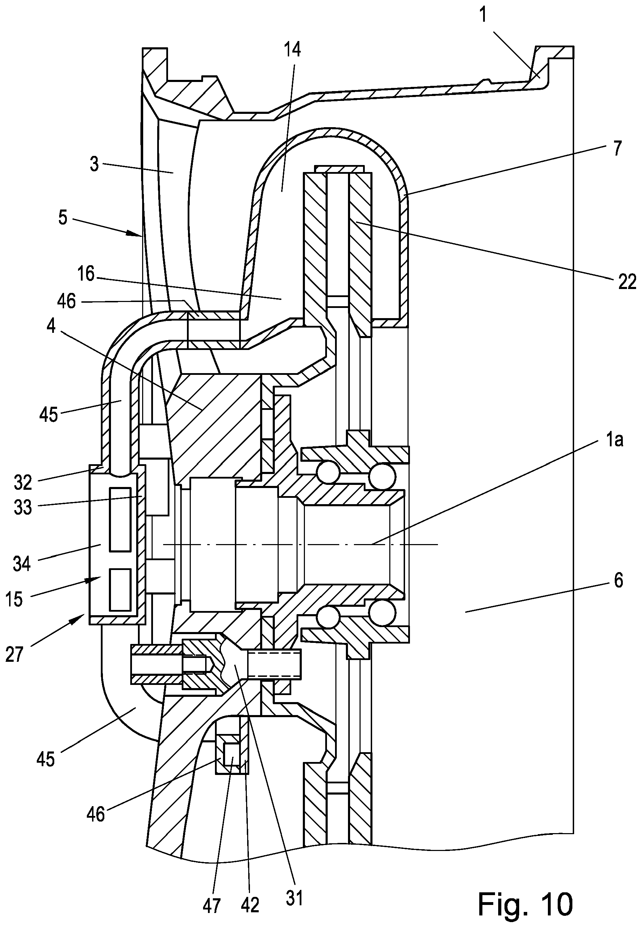

Mit den Fign. 10 bis 12 wird eine weitere Ausgestaltung einer erfindungsgemäßen Messfelge 1 erläutert. In dieser Ausführung wird wieder eine Sammelscheibe 27 verwendet, die nun allerdings nicht innenliegend im Felgeninnenraum 6 angeordnet ist, sondern außen an der Felgenstirnfläche 5 der Messfelge 1. Auch in dieser Ausführung kann eine Standardfelge verwendet werden, an der keinerlei Änderungen vorgenommen werden müssen.

Die Sammelscheibe 27 weist wiederum eine erste Sammelscheibenplatte 32 mit einer zentral innen liegenden Ausnehmung 36 auf. Axial beabstandet zur ersten Sammelscheibenplatte 32 ist eine zweite Sammelscheibenplatte 33 angeordnet. Zwischen der ersten Sammelscheibenplatte 32 und der zweiten Sammelscheibenplatte 33 bildet sich somit wieder ein Hohlraum 34 aus, der als Abführraum 15 fungiert. Die Sammelscheibe 27 ist an der außenliegenden Felgenstirnfläche 5 der Messfelge 1 angeordnet, beispielsweise mit geeigneten Schraubverbindungen, und dreht sich mit der Messfelge 1 mit.

Das Sammelgehäuse 7 mit dem Sammelkanal 16 ist in Fig. 10 wieder beidseitig, oder nur an einer Seite, teilweise über den beweglichen Bremsenteil, hier eine Bremsscheibe 22, gestülpt. Der Sammelkanal 16 ist über zumindest einen Verbindungskanal 45 mit dem Hohlraum 34 der Sammelscheibe 27 verbunden. Der Verbindungskanal 45 kann einteilig mit der Sammelscheibe 27 ausgebildet sein. Der Verbindungskanal 45 kann in die radial äußere Umfangsfläche der Sammelscheibe 27 münden (wie in Fign. 10 bis 12), wobei diese im Mündungsbereich zumindest teilweise offen ist. Der Verbindungskanal 45 kann aber auch über die erste oder zweite Sammelscheibenplatte 32, 33 in den Hohlraum 34 münden. Auch Kombinationen sind wiederum denkbar.

In einer vorteilhaften Ausgestaltung, wie in den Fign. 10 bis 12 dargestellt, ist ein Verbindungsring 46 vorgesehen, in dem eine stirnseitige Umfangsnut 47 eingeformt ist, sodass der Verbindungsring 46 einen U-förmigen Querschnitt aufweist und einseitig an einer Stirnseite zumindest teilweise offen ist. In die Umfangsnut 47 des Verbindungsringes 46 münden eine Anzahl, über den Umfang verteilt angeordneter Verbindungskanäle 45. Die Umfangsnut 47 ist damit mit dem Hohlraum 34 des Sammelscheibe 27 verbunden. Der Verbindungsring 46 ist mit der offenen Stirnseite dem Sammelkanal 16 zugewandt angeordnet, sodass der Sammelkanal 16 über die Länge seiner Erstreckung in Umfangsrichtung in die Umfangsnut 47 mündet. Über den restlichen Umfang kann sich ein Abschlussring 42 erstrecken, der die Umfangsnut 47 nach außen verschließt. Dieser Abschlussring 42 könnte auch mit U-förmig Querschnitt ausgeführt sein, um die Umfangsnut 47 im Bereich des Abschlussringes 42 zu vergrößern.

Die Ausführung mit zumindest einem Verbindungskanal 45 und einem Verbindungsring 46 kann natürlich ebenso in einer Ausführung der Messfelge 1 nach Fig. 4 oder Fig. 7 verwendet werden. In diesem Fall wären der Verbindungskanal 45 und der Verbindungsring 46 im Felgeninnenraum 6 angeordnet.

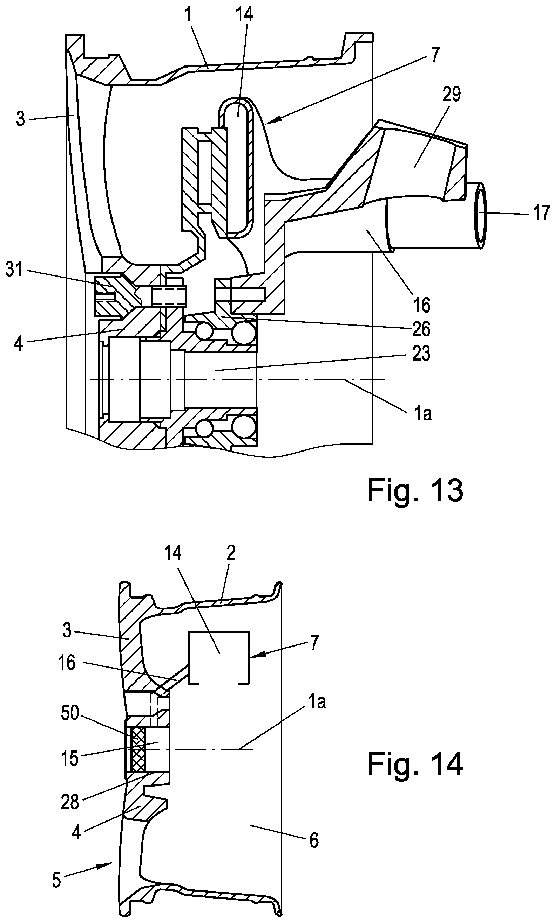

Anstelle einer Abführung des Bremsabriebs nach außen über die Messfelge 1 wie in den Fign. 1 bis 12, kann auch eine Abführung des Bremsabriebes nach innen über den Felgeninnenraum 6 und einen Radkasten des Fahrzeugs vorgesehen sein, wie in Fig. 13 dargestellt. Der Vorteil dieser Ausführung ist darin zu sehen, dass zur Abführung des Bremsabriebs keine Drehdurchführung erforderlich wäre. Allerdings ist im Bereich des Radkastens oftmals wenig Platz vorhanden, sodass eine solche Ausführung bei gewissen Fahrzeugen aufgrund des Platzmangels nicht umsetzbar sein kann.

Das drehfest im Felgeninnenraum 6 angeordnete Sammelgehäuse 7 mit dem Sammelkanal 16 ist wieder beidseitig oder nur an einer Seite (wie in Fig. 13) teilweise über den beweglichen Bremsenteil, hier eine Bremsscheibe 22, gestülpt. Der Sammelkanal 16 ist von der Seite der Messfelge 1 mit den Speichen 3 abgewandt ausgerichtet und weist damit in Richtung eines Radkastens eines Fahrzeugs. An diesen Sammelkanal 16 kann einfach eine Abführleitung 17 zum Abführen des gesammelten Bremsabriebs aus dem Sammelgehäuse 7 angeschlossen werden. Der Sammelkanal 16 fungiert hier gleichzeitig als Abführraum 15.

Bei allen oben beschriebenen Ausführungen schließt an den Abführraum 15 eine Abführleitung 17 an, über die Bremsabrieb abgeführt und einer Messeinrichtung 19 zugeführt wird. In einer alternativen Ausführung könnte im Abführraum 15 oder in einer mit dem Abführraum 15 verbundenen Mittenausnehmung 28 der Messfelge 1 ein Filtereinsatz 50 vorgesehen sein, wie in Fig. 14 dargestellt, in dem Bremsabrieb 50 aus einem durchströmenden Aerosol ausgefiltert und im Filtereinsatz 50 gesammelt wird. Damit kann der Filtereinsatz 50 nach einer Testfahrt entnommen werden und der im Filtereinsatz 50 gesammelte Bremsabrieb ausgewertet werden. Damit würde man den Bremsabrieb nicht online während der Testfahrt analysieren, sondern offline nach der Testfahrt. Vorteilhafterweise wird hierfür eine Ausgestaltung der Messfelge 1 verwendet, in der die Mittenausnehmung 28 als Abführraum 15 fungiert (z.B. wie in Fig. 8 dargestellt). Die Zuführung des Bremsabriebs zur Mittenausnehmung 28 kann beispielsweise aber auch mit einer Ausführung des Sammelgehäuses 7 und des Sammelkanals 16 nach Fig. 4 oder Fig. 7 (ohne den Abführstützen 37) oder nach Fig. 8 erfolgen.

Es ist offensichtlich, dass zwischen bewegten und drehfesten Bauteilen vorteilhaft ein Luftspalt vorgesehen ist, um Reibung und Verschleiß zu vermeiden. Ein solcher Luftspalt wird beispielsweise zwischen einer Sammelscheibe 27 und einem Sammelkanal 16 oder einem Verschlussring 42 vorgesehen. Ebenso ist ein Luftspalt zwischen einem bewegten Bremsenteil, beispielsweise einer Bremsscheibe 22, und dem Sammelgehäuse 7 vorteilhaft. Ein solcher Luftspalt kann auch variieren, um die Abführung des Bremsabriebs zu verbessern und zu verhindern, dass Bremspartikel verloren gehen. Der Luftspalt wird natürlich so ausgeführt, dass der Verlust der Bremspartikel minimiert wird.

Mit der erfindungsgemäßen Lösung in den beschriebenen Varianten lassen sich Bremspartikel klassifizieren und charakterisieren, ohne dass sich beim Sammeln störende Änderungen der Temperatur oder der Strömungsverhältnisse im Bereich der Bremsanlage ergeben. Eine Anwendung ist praktisch ohne bzw. nur mit minimalen Adaptierungen einer Standardfelge möglich, so dass ein kostengünstiger Einsatz mit geringem Aufwand möglich ist.

## Patentansprüche

1. Messfelge mit einer Felgenumfangsfläche (2), die zumindest an einer Felgenstirnfläche (5) der Messfelge (1) über eine oder mehrere Speichen (3) mit einem zentral innen liegenden Felgenflansch (4) verbunden ist, wobei zwischen der Felgenumfangsfläche (2), den Speichen (3) und dem Felgenflansch (4) ein Felgeninnenraum (6) ausgebildet ist, **dadurch gekennzeichnet, dass** im Felgeninnenraum (6) ein sich in Umfangsrichtung der Messfelge (1) über einen Erstreckungswinkel (α) erstreckendes Sammelgehäuse (7) angeordnet ist, dass im Sammelgehäuse (7) ein Sammelgehäuseinnenraum (14) ausgebildet ist und das Sammelgehäuse (7) an einer radial inneren, sich in Umfangsrichtung der Messfelge (1) erstreckenden Umfangsfläche (8) zum Sammelgehäuseinnenraum (14) hin zumindest teilweise geöffnet ist, **dass** an der Messfelge (1) am Felgenflansch (4) ein Abführraum (15) vorgesehen ist **und dass** an der Messfelge (1) ein Sammelkanal (16) vorgesehen ist, der den Sammelgehäuseinnenraum (14) des Sammelgehäuses (7) mit dem Abführraum (15) verbindet.

2. Messfelge nach Anspruch 1, **dadurch gekennzeichnet, dass** der Erstreckungswinkel (α) zwischen 100° und 180° beträgt, vorzugsweise zwischen 100° und 130° ist.

3. Messfelge nach Anspruch 1 oder 2, **dadurch gekennzeichnet, dass** sich ein dem Sammelgehäuseinnenraum (14) abgewandtes Ende des Sammelkanals (16) eine vorgegebene Länge in Umfangsrichtung des Sammelgehäuses (7) erstreckt.

4. Messfelge nach einem der Ansprüche 1 bis 3, **dadurch gekennzeichnet, dass** am Felgenflansch (4) zentral innen eine Mittenausnehmung (28) vorgesehen ist und die Mittenausnehmung (28) den Abführraum (15) ausbildet.

5. Messfelge nach Anspruch 4, **dadurch gekennzeichnet, dass** am Felgenflansch (4) zumindest eine radiale Ausnehmung (40) vorgesehen ist, die den Felgeninnenraum (6) mit der Mittenausnehmung (28) verbindet, indem die radiale Ausnehmung (40) radial außen an der radial äußeren Umfangsfläche des Felgenflansches (4) im Bereich des Felgenflansches (4), der in den Felgeninnenraum (6) ragt, mündet und radial innen in der Mittenausnehmung (28) mündet **und dass** der Sammelkanal (16) an der äußeren Umfangsfläche des Felgenflansches (4) im Bereich der Mündung der zumindest einen radialen Ausnehmung (40) endet, um den Abführraum (15) mit dem Sammelgehäuseinnenraum (14) zu verbinden.

6. Messfelge nach einem der Ansprüche 1 bis 3, **dadurch gekennzeichnet, dass** an einem im Felgeninnenraum (6) liegenden axialen Ende des Felgenflansches (4) oder außen an der Felgenstirnfläche (5) eine Sammelscheibe (27) angeordnet ist, in der ein Hohlraum (34) vorgesehen ist und der Hohlraum (34) den Abführraum (15) ausbildet, indem der Hohlraum (34) mit dem Sammelkanal (16) verbunden ist.

7. Messfelge nach Anspruch 6, **dadurch gekennzeichnet, dass** an der Sammelscheibe (27) an einer radial äußeren Umfangsfläche und/oder an einer Stirnfläche zumindest eine Öffnung zum Hohlraum (34) vorgesehen ist **und dass** der Sammelkanal (16) im Bereich der zumindest einen Öffnung endet, um den Hohlraum (34) mit dem Sammelgehäuseinnenraum (14) zu verbinden.

8. Messfelge nach Anspruch 6 oder 7, **dadurch gekennzeichnet, dass** die Sammelscheibe (27) eine erste Sammelscheibenplatte (32) und eine zweite Sammelscheibenplatte (33) aufweist, die zur Ausbildung des Hohlraumes (34) axial voneinander beabstandet angeordnet sind und an der erste Sammelscheibenplatte (32) eine zentral innen liegende Ausnehmung (36) vorgesehen ist, die mit dem Hohlraum (34) verbunden ist.

9. Messfelge nach Anspruch 8, **dadurch gekennzeichnet, dass** die Ausnehmung (36) der ersten Sammelscheibenplatte (32) in der Mittenausnehmung (28) der Messfelge (1) angeordnet ist.

10. Messfelge nach einem der Ansprüche 6 bis 9, **dadurch gekennzeichnet, dass** an der Sammelscheibe (27) zumindest ein Verbindungskanal (45) angeordnet ist, der mit dem Hohlraum (34) verbunden ist und der Verbindungskanal (45) in eine Umfangsnut (47) eines Verbindungsrings (46) mündet **und dass** der der Sammelkanal (16) im Bereich der Umfangsnut (47) endet, um den Hohlraum (34) über den Verbindungskanal (45) und den Verbindungsring (46) mit dem Sammelgehäuseinnenraum (14) zu verbinden.

11. Messfelge nach einem der Ansprüche 1 bis 10, **dadurch gekennzeichnet, dass** an der Messfelge (1) eine Drehdurchführung (24) vorgesehen ist, die mit dem Abführraum (15) verbunden ist.

12. Messfelge nach Anspruch 4 oder 9, **dadurch gekennzeichnet, dass** in der Mittenausnehmung (28) als Drehdurchführung (24) ein hohler Abführstutzen (37) drehbar gelagert angeordnet ist.

13. Anordnung zum Erfassen des Bremsabriebs einer Bremseinrichtung (20) eines Fahrzeugrades, wobei das Fahrzeugrad eine Messfelge (1) nach einem der Ansprüche 1 bis 12 aufweist und das Sammelgehäuse (7) der Messfelge (1) zumindest teilweise einen beweglichen Bremsenteil der Bremseinrichtung (20) umgibt, indem der bewegliche Bremsenteil in den Sammelgehäuseinnenraum (14) ragt.

14. Anordnung nach Anspruch 13, **dadurch gekennzeichnet, dass** der Bremsabrieb aus dem Abführraum (15) über eine Abführleitung (17) zu einer Messeinrichtung (19) geführt wird.

15. Anordnung nach Anspruch 13, **dadurch gekennzeichnet, dass** im Abführraum (15) oder in einer mit dem Abführraum (15) verbundenen Mittenausnehmung (28) ein Filtereinsatz (50) angeordnet wird, in dem Bremsabrieb gesammelt wird.

## Claims

1. A measuring rim having a rim circumferential surface (2) which is connected at least on one rim end face (5) of the measuring rim (1) via one or more spokes (3) to a centrally inwardly positioned rim flange (4), wherein a rim interior (6) is formed between the rim circumferential surface (2), the spokes (3) and the rim flange (4), **characterized in that** a collecting housing (7), which extends in the circumferential direction of the measuring rim (1) over an extension angle (α), is arranged in the rim interior (6), **in that** a collecting housing interior (14) is formed in the collecting housing (7) and the collecting housing (7) is at least partly open towards the collecting housing interior (14) on a radially inner circumferential surface (8) extending in the circumferential direction of the measuring rim (1), **in that** a discharge area (15) is provided on the rim flange (4) on the measuring rim (1), **and in that** a collecting channel (16) which connects the collecting housing interior (14) of the collecting housing (7) to the discharge area (15) is provided on the measuring rim (1).

2. The measuring rim according to claim 1, **characterized in that** the extension angle (α) is between 100° and 180°, preferably between 100° and 130°.

3. The measuring rim according to claim 1 or 2, **characterized in that** an end of the collecting channel (16) facing away from the collecting housing interior (14) extends for a predetermined length in the circumferential direction of the collecting housing (7).

4. The measuring rim according to any one of claims 1 to 3, **characterized in that** a central recess (28) which forms the discharge area (15) is provided centrally on the inside of the rim flange (4).

5. The measuring rim according to claim 4, **characterized in that** at least one radial recess (40) is provided on the rim flange (4), which connects the rim interior (6) to the central recess (28) **in that** the radial recess (40) on the radially outer circumferential surface of the rim flange (4) opens out into the region of the rim flange (4), which projects into the rim interior (6), and opens out radially inside the central recess (28), **and in that** the collecting channel (16) ends on the outer circumferential surface of the rim flange (4) in the region of the opening of the at least one radial recess (40) in order to connect the discharge area (15) to the collecting housing interior (14).

6. The measuring rim according to any one of claims 1 to 3, **characterized in that** a collecting disk (27) is arranged on an axial end of the rim flange (4), which axial end lies in the rim interior (6), or on the outside of the rim end face (5), in which collecting disk (27) a cavity (34) is provided and the cavity (34) forms the discharge area (15) **in that** the cavity (34) is connected to the collecting channel (16).

7. The measuring rim according to claim 6, **characterized in that** at least one opening towards the cavity (34) is provided on the collecting disk (27) on a radially outer circumferential surface and/or at an end face, **and in that** the collecting channel (16) ends in the region of the at least one opening in order to connect the cavity (34) to the collecting housing interior (14).

8. The measuring rim according to claim 6 or 7, **characterized in that** the collecting disk (27) has a first collecting disk plate (32) and a second collecting disk plate (33), which are arranged axially spaced apart from one another to form the cavity (34), and a centrally inwardly positioned recess (36) is provided on the first collecting disk plate (32), which recess (36) is connected to the cavity (34).

9. The measuring rim according to claim 8, **characterized in that** the recess (36) of the first collecting disk plate (32) is arranged in the central recess (28) of the measuring rim (1).

10. The measuring rim according to any one of claims 6 to 9, **characterized in that** at least one connecting channel (45) is arranged on the collecting disk (27), which connecting channel (45) is connected to the cavity (34) and opens out into a circumferential groove (47) of a connecting ring (46), **and in that** the collecting channel (16) ends in the region of the circumferential groove (47) in order to connect the cavity (34) to the collecting housing interior (14) via the connecting channel (45) and the connecting ring (46).

11. The measuring rim according to any one of claims 1 to 10, **characterized in that** a rotary feedthrough (24) is provided on the measuring rim (1) which is connected to the discharge area (15).

12. The measuring rim according to claim 4 or 9, **characterized in that** a hollow discharge nozzle (37) is rotatably mounted in the central recess (28) as a rotary feedthrough (24).

13. An arrangement for detecting the brake abrasion of a brake device (20) of a vehicle wheel, wherein the vehicle wheel has a measuring rim (1) according to any one of claims 1 to 12 and the collecting housing (7) of the measuring rim (1) at least partly surrounds a movable brake part of the brake device (20) in that the movable brake part projects into the collecting housing interior (14).

14. The arrangement according to claim 13, **characterized in that** the brake abrasion is guided out of the discharge area (15) via a discharge line (17) to a measuring device (19).

15. The arrangement according to claim 13, **characterized in that** a filter insert (50) in which brake abrasion is collected is arranged in the discharge area (15) or in a central recess (28) connected to the discharge area (15).

## Revendications

1. Jante de mesure comportant une surface circonférentielle de jante (2) qui est reliée au moins à une surface frontale de jante (5) de la jante de mesure (1) par l'intermédiaire d'un ou de plusieurs rayons (3) comportant une bride de jante (4) centrale intérieure, un espace intérieur de jante (6) étant aménagé entre la surface circonférentielle de jante (2), les rayons (3) et la bride de jante (4),
**caractérisée en ce qu'**un boîtier collecteur (7) s'étendant dans la direction circonférentielle de la jante de mesure (1) sur un angle d'extension (α) est disposé dans l'espace intérieur de jante (6), **en ce qu'**un espace intérieur de boîtier collecteur (14) est aménagé dans le boîtier collecteur (7) et le boîtier collecteur (7) est ouvert au moins partiellement sur une surface circonférentielle (8) radialement intérieure s'étendant dans la direction circonférentielle de la jante de mesure (1) vers l'espace intérieur de boîtier collecteur (14), **en ce qu'**un espace de décharge (15) est prévu sur la jante de mesure (1) au niveau de la bride de jante (4), **et en ce qu'**un canal de collecte (16) est prévu sur la jante de mesure (1), lequel canal de collecte relie l'espace intérieur de boîtier collecteur (14) du boîtier collecteur (7) à l'espace de décharge (15).

2. Jante de mesure selon la revendication 1, **caractérisée en ce que** l'angle d'extension (α) est compris entre 100° et 180°, de préférence entre 100° et 130°.

3. Jante de mesure selon la revendication 1 ou 2,
**caractérisée en ce qu'**une extrémité du canal de collecte (16) éloignée de l'espace intérieur de boîtier collecteur (14) s'étend sur une longueur prédéterminée dans la direction circonférentielle du boîtier collecteur (7).

4. Jante de mesure selon l'une des revendications 1 à 3,
**caractérisée en ce qu'**un évidement central (28) est prévu au centre et à l'intérieur de la bride de jante (4), et l'évidement central (28) forme l'espace de décharge (15).

5. Jante de mesure selon la revendication 4, **caractérisée en ce qu'**au moins un évidement radial (40) est prévu sur la bride de jante (4), lequel évidement relie l'espace intérieur de jante (6) à l'évidement central (28) du fait que l'évidement radial (40) débouche radialement vers l'extérieur sur la surface circonférentielle radialement extérieure de la bride de jante (4) dans la zone de la bride de jante (4) qui fait saillie dans l'espace intérieur de jante (6), et débouche radialement vers l'intérieur dans l'évidement central (28), **et en ce que** le canal de collecte (16) se termine sur la surface circonférentielle extérieure de la bride de jante (4) dans la zone de l'embouchure de l'au moins un évidement radial (40) pour relier l'espace de décharge (15) à l'espace intérieur de boîtier collecteur (14).

6. Jante de mesure selon l'une des revendications 1 à 3,
**caractérisée en ce que,** sur une extrémité axiale de la bride de jante (4), laquelle extrémité se trouve dans l'espace intérieur de jante (6), ou à l'extérieur sur la surface frontale de jante (5), il est disposé un disque collecteur (27) dans lequel il est prévu un espace creux (34), et l'espace creux (34) forme l'espace de décharge (15) du fait que l'espace creux (34) soit relié au canal de collecte (16).

7. Jante de mesure selon la revendication 6, **caractérisée en ce qu'**au moins une ouverture vers l'espace creux (34) est prévue sur le disque collecteur (27), sur une surface circonférentielle radialement extérieure et/ou sur une surface frontale, **et en ce que** le canal de collecte (16) se termine dans la zone de l'au moins une ouverture pour relier l'espace creux (34) à l'espace intérieur de boîtier collecteur (14).

8. Jante de mesure selon la revendication 6 ou 7, **caractérisée en ce que** le disque collecteur (27) présente une première plaque de disque collecteur (32) et une seconde plaque de disque collecteur (33), lesquelles sont disposées axialement espacées l'une de l'autre pour la formation de l'espace creux (34), et un évidement (36) central intérieur est prévu sur la première plaque de disque collecteur (32), lequel évidement est relié à l'espace creux (34).

9. Jante de mesure selon la revendication 8, **caractérisée en ce que** l'évidement (36) de la première plaque de disque collecteur (32) est disposé dans l'évidement central (28) de la jante de mesure (1).

10. Jante de mesure selon l'une des revendications 6 à 9,
**caractérisée en ce qu'**au moins un canal de liaison (45) est disposé sur le disque collecteur (27), lequel canal de liaison (45) est relié à l'espace creux (34) et débouche dans une rainure circonférentielle (47) d'un anneau de liaison (46), **et en ce que** le canal de collecte (16) se termine dans la zone de la rainure circonférentielle (47) pour relier l'espace creux (34) à l'espace intérieur de boîtier collecteur (14) par l'intermédiaire du canal de liaison (45) et de l'anneau de liaison (46).

11. Jante de mesure selon l'une des revendications 1 à 10,
**caractérisée en ce qu'**un passage tournant (24) est prévu sur la jante de mesure (1), lequel passage est relié à l'espace de décharge (15).

12. Jante de mesure selon la revendication 4 ou 9, **caractérisée en ce que,** comme passage tournant (24), une tubulure de décharge (37) creuse est disposée de manière à pouvoir tourner dans l'évidement central (28).

13. Agencement permettant de capter les particules de frein abrasées d'un système de freinage (20) d'une roue de véhicule, la roue de véhicule présentant une jante de mesure (1) selon l'une des revendications 1 à 12, et le boîtier collecteur (7) de la jante de mesure (1) entourant au moins partiellement une pièce de freinage mobile du système de freinage (20) du fait que la pièce de freinage mobile fasse saillie dans l'espace intérieur de boîtier collecteur (14).

14. Agencement selon la revendication 13, **caractérisé en ce que** les particules de frein abrasées sont guidées de l'espace de décharge (15) à un système de freinage (19) par l'intermédiaire d'une conduite de décharge (17).

15. Agencement selon la revendication 13, **caractérisé en ce que**, dans l'espace de décharge (15) ou dans un évidement central (28) relié à l'espace de décharge (15), il est disposé une cartouche filtrante (50) dans laquelle sont recueillies des particules de frein abrasées.
